# EUROPEAN PATENT SPECIFICATION

(11) **EP 0 498 844 B1**
(45) Date of publication and mention of the grant of the patent: **31.08.1994**
(21) Application number: 90916963.3
(22) Date of filing: 25.10.1990
(51) Int. Cl.: C01F 11/28, C10H 3/00, C10H 15/06

(54) **Apparatus and process for the production of acetylene.**
Anlage und Verfahren zur Herstellung von Acetylen.
Appareil et procédé pour la production d'acétylène.

(30) Priority: 30.10.1989 US 434270
(43) Date of publication of application: 19.08.1992
(73) Proprietor: THE UNIVERSITY OF UTAH, Salt Lake City, UT 84108 (US)
(72) Inventor: BUNGER, James, W., Salt Lake City, UT 84106 (US); RYU, Hoil, Seoul 156-033 (KR); DEVINENI, Prasad, A., V., Salt Lake City, UT 84117 (US)
(74) Representative: W.P. Thompson & Co.
(86) International application number: US9006149
(87) International publication number: WO9106509

(56) References cited:
- DE-A- 2 148 920
- DE-C- 693 064

## Description

The invention comprises a process for simultaneous manufacture of acetylene and calcium chloride from calcium carbide and hydrogen chloride.

In the currently practiced art, calcium carbide is charged to a large tank containing water and which is outfitted with slow moving stirring paddles. The carbide is dropped onto the surface of the water where it is allowed to react spontaneously. Acetylene gas is withdrawn from the top of the tank while calcium hydroxide and other impurities settle to the bottom of the tank. The reactor is cooled by internal coils containing cooling water or by spraying cold water on the exterior of the tank or both. The calcium hydroxide produced, along with its impurities, is discharged, stockpiled and disposed of as a low value neutralizer for industrial acid streams or for maintaining pH balance in sewage plants. Depending upon the application, acetylene is compressed and stored in high pressure vessels or, incases where it is used as a chemical feedstock, is pipelined to a nearby chemicals processing plant.

The current problems with the state-of-the-art technology are:
A. Uncontrolled contact of the carbide with the water, resulting in lower reaction rate control and the possibility of incandescence. Incandescence results when calcium carbide particles are buoyed by the evolution of acetylene and rise to the surface of the water where they react violently but without the benefit of cooling that prevails when the particles are submerged. The lack of cooling and the high exothermicity of the reaction may result in a localized temperature rise which heats the particle to incandescent or glowing temperatures. If the pressure of the acetylene is higher than approximately 190 kPa absolute, this condition may initiate detonation or deflagration reactions within the acetylene, resulting in a substantial pressure rise, rupture of the vessel, and uncontrolled release of the contents. This condition presents a significant fire and safety hazard. Thus, poor reaction control results in a higher probability for adverse chemical reactions and necessitates the requirement that the primary reaction vessel be operated at a low operating pressure.
B. Currently practiced technology utilizes a single reactor vessel of a stirred tank reactor design. Because of the inherent characteristics of a stirred tank reactor large vessels are required in relationship to the throughout of carbide to avoid discharge of unreacted carbide. In practice, slow mixing results in a reactor which is neither an ideal CSTR or ideal plug flow reactor and for which little is known of the local processes occurring. This condition results in poor rate control and unsteady operation.
C. Currently practiced technology results in extremely low utilization of the available heat evolved in the exothermic reaction between calcium carbide and water. In currently practiced technology, little or none of the heat produced is used. This heat amounts to about 20% of the available chemical energy in the reactor and is wasted through the requirements of cooling.
D. In currently practiced technology, little or no effort is made to improve the quality of the calcium hydroxide byproduct. Calcium hydroxide produced in acetylene manufacturing contains substantial impurities originating from coal, coke or limestone used in the manufacture of the calcium carbide. These impurities render the calcium hydroxide produced of extremely low or no market value.

It is an objective of the present invention to overcome those problems in its prior art identified above.

The process of the invention consists of a two-stage reactor system in which calcium carbide and water are reacted to form acetylene and calcium hydroxide. The calcium hydroxide is subsequently reacted with hydrogen chloride in a neutralizer to form calcium chloride. The calcium chloride may be marketed in an aqueous form or alternatively sent to a drying apparatus to produce marketable anhydrous calcium chloride.

The invention embodies a unique, dual reactor configuration in which water and calcium carbide are mixed in an entrained flow-type reactor. The reaction is allowed to occur in a dilute aqueous phase with residence times such that the reaction proceeds to 60-90% completion while in the primary reactor. Entrained reaction products and unreacted feed material are carried overhead to the secondary reactor which consists of a dense phase, laminar plug-flow type reactor. Calcium hydroxide intermediate product is allowed to settle and is removed from the bottom of the reactor. Unreacted water is separated from the calcium hydroxide by use of an overflow weir and recycled to the primary reactor. The combination of the primary reactor and the secondary reactor are such that the majority of reaction occurs in a stirred-tank reactor type configuration which undergoes a transition in the secondary reactor to a plug-flow reactor configuration. The plug-flow reactor allows for the completion of the reaction of calcium carbide with water. In the presence of excess water, the reaction of calcium carbide with water is effectively a first order, irreversible reaction.

### THE DRAWING

A preferred embodiment of the invention is shown in the accompanying drawings.
FIG. 1 is a chart showing a reactor system in which calcium carbide hydrogen chloride and water are reacted to form acetylene and calcium chloride;
FIG. 2, a chart showing the two-stage reactor configuration;
FIG. 3, the details of the upper section of a vertical, tubular primary reactor; and
FIG. 4, a detailed diagram of a secondary reaction vessel.

### DETAILED DESCRIPTION OF THE PREFERRED EMBODIMENT

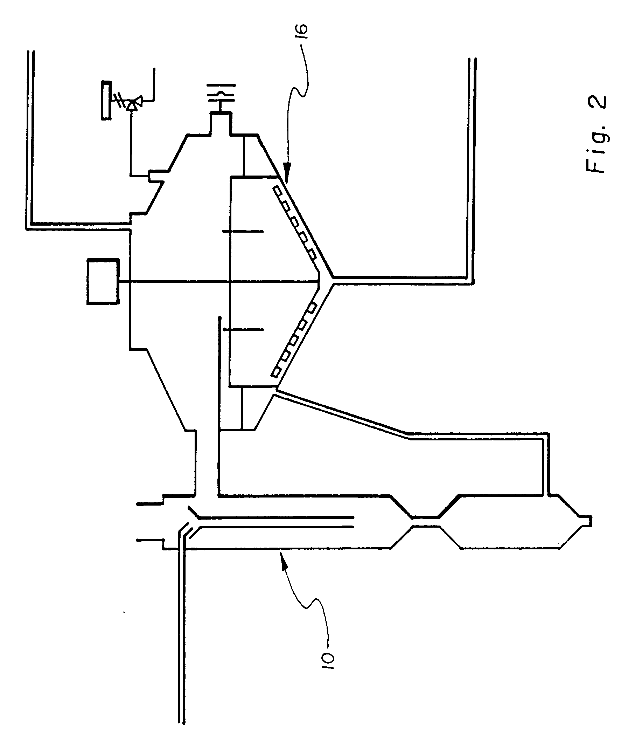

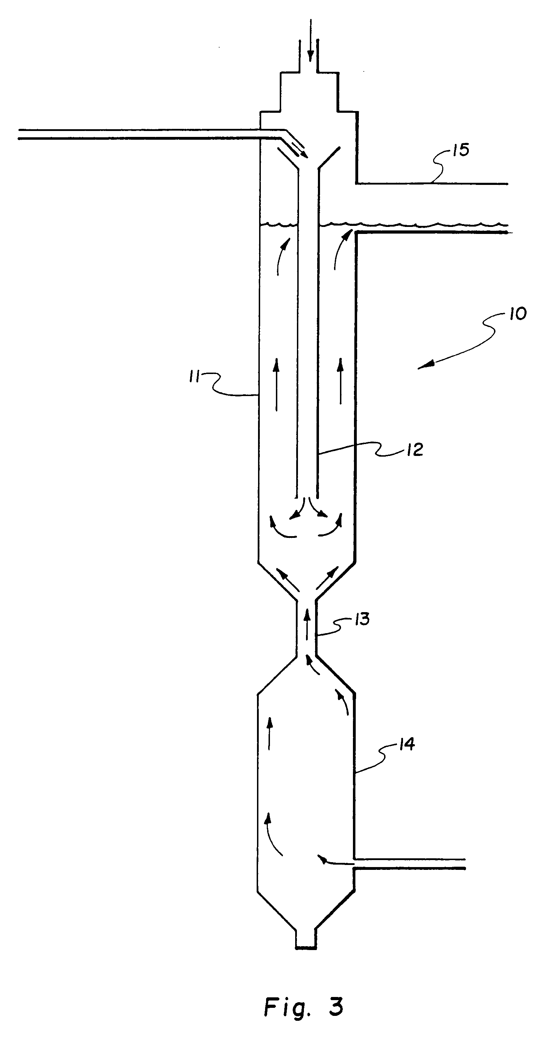

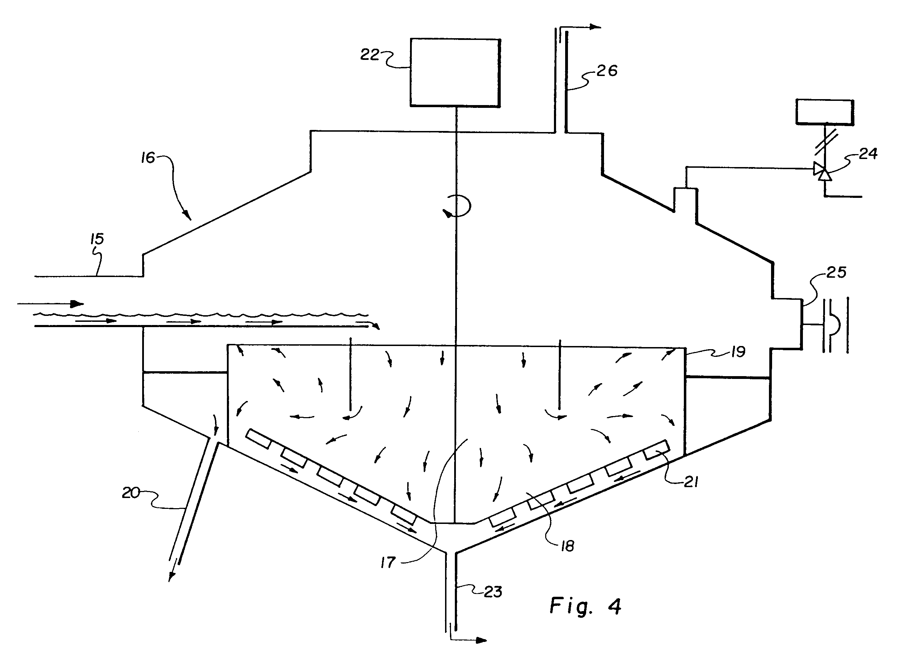

Figure 2 illustrates the complete dual reaction system showing the initial reactor 10 and the secondary reactor 16, described in further detail in Figs. 3 and 4.

As shown in Fig. 3, the primary reactor 10 consists of an upper section 11 of a vertical, tubular design. The upper section 11 is outfitted with an annular downcomer tube 12 to which makeup water is charged. Calcium carbide is introduced to the center of the downcomer tube 12 and passes through the downcomer tube 12 in a co-current fashion with the water. Reaction is initiated at this point. The reactants proceed to the bottom of the upper section 11 where they comingle with recycled water passing through the velocity control restriction 13. The calcium carbide continues to react with the water in the bottom of the upper zone until the particle size reaches approximately 2-3 millimeters in diameter, at which time the particles are entrained by the upward flow of the fluid phase and carried via the side arm attachment to the secondary reactor. Residence times in the primary reactor 10 are on the order of 1-3 minutes.

Unreacted impurities in the calcium carbide which are more dense than calcium carbide pass downward through the velocity control restrictor 13 and are accumulated in the lower section 14 of the primary reactor 10. Recycled water from the secondary reactor is introduced near the bottom of the lower Section 14 of the primary reactor 10. The rate at which this recycled water is introduced is determined by the required velocity in the velocity control restriction 13. The velocity in this section is controlled such that particles which have a density greater than calcium carbide pass downward through the zone, while calcium carbide particles are entrained upward due to the velocity which is in excess of the terminal velocity of the particle. Nonreacting and heavy impurities are withdrawn from the lower section 14 of the primary reactor 10 either continuously or periodically through an appropriate valve (not shown).

After the reaction is 60-90% complete, the unreacted calcium carbide and the intermediate reaction product, calcium hydroxide, along with acetylene and unreacted water pass through the side arm connector 15 to the secondary reaction vessel 16 shown in Fig. 4.

The secondary reactor vessel 16 is a circular vessel of sufficient size so as to provide a calcium hydroxide settling time of 30 minutes to two hours. The overflow material from the primary reactor 10 is introduced into an inner annular zone 17 where it is allowed to flow in a downward fashion and where the calcium hydroxide is allowed to settle in a dense zone 18.

Unreacted calcium carbide reacts to completion in the secondary reactor 16. Supernatant unreacted water is allowed to overflow an internal weir 19 of a concentric annular design, where it is pumped through a tube 20 to the lower zone of the primary reactor 10. Settled calcium hydroxide is raked toward the bottom of the reactor zone. The rake 21 is driven by a mechanical device 22 designed for an appropriate speed of revolution of approximately 1-6 revolutions per minute.

Calcium hydroxide is withdrawn from the bottom of the secondary reactor 16 through a tube 23 and sent to a hydrogen chloride neutralizer (not shown). The secondary reactor 16 is also outfitted with an over-pressure relief valve 24 to vent acetylene gases in the event of failure of filters and back pressure relief devices (not shown). The secondary reactor is also fitted with appropriate rupture disks 25 safely vented to areas of no human occupancy for the purpose of safely venting any deflagration of detonation which may occur as a result of the auto-reactions of acetylene. The acetylene product is generated and taken from the secondary reaction vessel 16 through a tube 26 through drying and filtering devices (not shown) as required to render the product marketable.

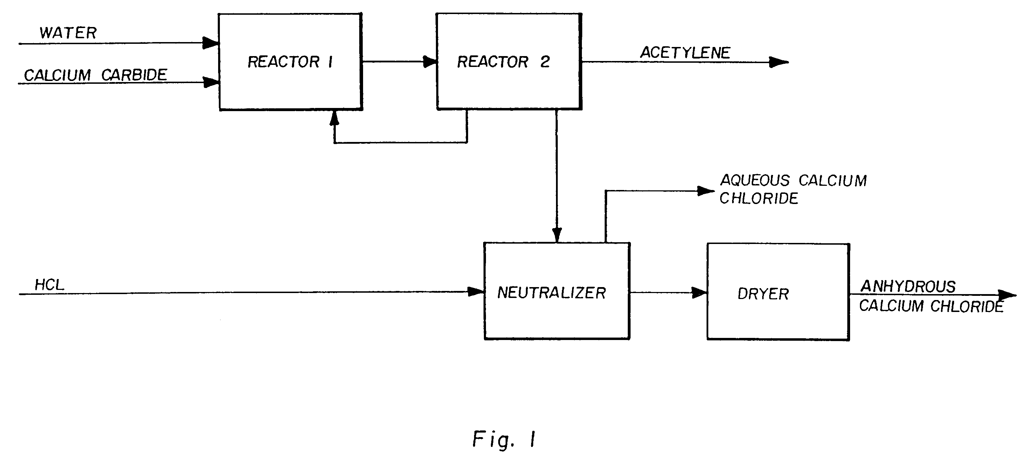

As shown in Fig. 1, the calcium hydroxide is sent to a neutralizer section where it is mixed with hydrochloric acid. The neutralizer reaction consists of an open tubular reactor of sufficient volume to allow residence times between 1-5 seconds. The ensuing reaction generates heat and produces dissolved calcium chloride and water. Alternatively, anhydrous hydrogen chloride may be added to the calcium hydroxide stream from the secondary reactor to form the same products but without the additional water contained in the hydrochloric acid. The quantity of HCl added is controlled through monitoring by pH meters or other appropriate monitors. Insoluble solids contained in the calcium chloride stream may be gravity separated through the use of cyclone separators or settling towers. Alternatively, the solution may be filtered to remove insoluble solids prior to drying.

The aqueous calcium chloride may be marketed as a product or, alternatively, sent to a drying apparatus where the water is removed from the calcium chloride. Drying improves the market value of calcium chloride. Heat generated in the primary reactor and secondary reactor and the neutralizer are retained, insofar as is safely possible, as sensible heat of the calcium chloride solution. At this high temperature sensible heat contributes significantly to the energy efficiency of the drying apparatus and minimizes the amount of external heat which must be added to perform the drying operation. Excess heat generated in the reactors and the neutralizer (see Fig. 1) may be used to heat air used in the dryer. The dryer configuration may consist of any number of commercially available spray-type dryers designed for evaporation of liquid from crystalline or solid materials. A secondary dryer may be incorporated to further reduce the amount of water-of-hydration. The secondary dryer will require additional heat and may be of the configuration of commercially available fired-heater dryers. A product of the drying operation is an anhydrous calcium chloride which may be marketed.

Obviously, numerous additional modifications and variations on the present invention are possible in light of the above teachings. It is therefore to be understood that within the scope of the appended claims, the invention may be practiced otherwise than as specifically described herein.

## Claims

1. An apparatus for the production of acetylene which comprises;
(a) a two-stage reactor system comprising a primary reactor and a secondary reactor,
(b) means for continuously charging particulate calcium carbide to the primary reactor,
(c) means for contacting particulate calcium carbide with an excess of water in the primary reactor to provide aqueous phase reaction conditions of calcium carbide and water with a residence time to partially react the calcium carbide,
(d) means for continuously conveying the partially reacted particulate calcium carbide of step (c) from the primary reactor to the secondary reactor,
(e) means to provide a plug flow reaction environment in the secondary reactor,
(f) means for removing acetylene gas from the reaction system, and
(g) means for removing calcium hydroxide from the secondary reactor.

2. The apparatus of claim 1 additionally comprising means for recycling water from the secondary reactor to the primary reactor.

3. The apparatus of claim 1 wherein the residence time provided in the primary reactor is such to react between 60 and 90 percent of the calcium carbide.

4. The apparatus of claim 1 wherein the contacting means in (c) comprises a means for directing a flow of water upwards through particles of calcium carbide.

5. The apparatus of claim 4 wherein the upward flow of water is regulated to entrain partially reacted particles of calcium carbide and carry them to the secondary reactor via the conveying means.

6. The apparatus of claim 5 wherein the upward flow of water is regulated to entrain particles of calcium carbide which have reached a size between about 2 and 3 millimeters in diameter.

7. The apparatus of claim 5 wherein calcium hydroxide produced in the primary reactor from reaction of the calcium carbide and water is entrained in the upward flow and carried to the secondary reactor via the conveying means.

8. The apparatus of claim 1 additionally comprising a means for removing particles having a density greater than calcium carbide from the primary reactor.

9. The apparatus of claim 8 wherein the particle removing means comprises a velocity control restrictor zone wherein an upward flow of water is provided at a velocity such that particles having a density greater than calcium carbide are carried downward through the zone.

10. The apparatus of claim 1 wherein the plug-flow reaction environment in the secondary vessel is provided by a secondary vessel of a configuration to allow calcium hydroxide produced by reaction of the calcium carbide and water to settle.

11. The apparatus of claim 10 wherein the calcium hydroxide settles to a dense zone in the bottom of the secondary reactor.

12. The apparatus of claim 11 wherein means for removing the calcium hydroxide from the secondary reactor comprises a tube directing flow from the dense zone.

13. The apparatus of claim 1 additionally comprises a neutralizer for reacting the calcium hydroxide removed from the secondary reactor with hydrogen chloride to form calcium chloride.

14. The apparatus of claim 13 wherein the hydrogen chloride is hydrochloric acid.

15. The apparatus of claim 13 wherein the hydrogen chloride is anhydrous hydrogen chloride.

16. The apparatus of claim 13 additionally comprising a means for drying the calcium chloride.

17. The apparatus of claim 16 additionally comprising a heat conveying means for conveying the heat produced by reaction of the calcium carbide and water in the primary reactor to the calcium chloride drying means.

18. The apparatus of claim 13 additionally comprising a means for utilizing the heat produced by reaction of the calcium hydroxide and hydrogen chloride to dry the calcium chloride.

19. A process for the production of acetylene which comprises;
(i) continuously adding an excess of water and particulate calcium carbide to a primary reactor,
(ii) contacting in the primary reactor the water and calcium carbide for reaction to form acetylene gas and calcium hydroxide under aqueous phase reaction conditions,
(iii) transferring the unreacted calcium carbide to a secondary reactor,
(iv) reacting the unreacted calcium carbide in the secondary reactor under plug-flow reaction conditions,
(v) recovering acetylene gas generated in the primary reactor and the secondary reactor, and
(vi) recovering calcium hydroxide from the secondary reactor.

20. The process of claim 19 additionally comprising the step of recycling water from the secondary reactor to the primary reactor.

21. The process of claim 19 wherein the residence time in the primary reactor is such to react between 60 and 90 percent of the calcium carbide.

22. The process of claim 19 wherein the contacting is accomplished by directing a flow of water upwards through particles of calcium carbide.

23. The process of claim 22 wherein the upward flow of water is regulated to entrain partially reacted particles of calcium carbide for transfer to the secondary reactor.

24. The process of claim 22 wherein the upward flow of water is regulated to entrain particles of calcium carbide which have reached a size between about 2 and 3 millimeters in diameter.

25. The process of claim 22 wherein calcium hydroxide produced in the primary reactor from reaction of the calcium carbide and water is entrained in the upward flow and transferred to the secondary reactor.

26. The process of claim 19 wherein particles having a density greater than calcium carbide are removed from the primary reactor.

27. The process of claim 26 wherein the particles are removed by an upward flow of water in a restrictor zone at a velocity such that particles having a density greater than calcium carbide are carried downward through the zone.

28. The process of claim 19 wherein the plug-flow reaction environment in the secondary vessel is under conditions wherein the calcium hydroxide produced by reaction of the calcium carbide and water is allowed to settle.

29. The process of claim 28 wherein the calcium hydroxide settles to a dense zone in the bottom of the secondary reactor.

30. The process of claim 29 wherein the calcium hydroxide is removed from the secondary reactor by directing flow from the dense zone through a tube.

31. The process of claim 19 wherein the calcium hydroxide removed from the secondary reactor is reacted with hydrogen chloride to form calcium chloride.

32. The process of claim 31 wherein the hydrogen chloride is hydrochloric acid.

33. The process of claim 31 wherein the hydrogen chloride is anhydrous hydrogen chloride.

34. The process of claim 31 wherein the calcium chloride is dried.

35. The process of claim 34 wherein heat produced by reaction of the calcium carbide and water in the primary reactor is conveyed to a means to dry the calcium chloride.

36. The process of claim 31 wherein heat produced by the neutralization of the calcium hydroxide and hydrogen chloride is used to dry the calcium chloride.

## Patentansprüche

1. Apparatur zur Herstellung von Acetylen, bestehend aus:
(a) einem zweistufigem Reaktorsystem, bestehend aus einem ersten Reaktor und einem zweiten Reaktor,
(b) Mitteln zur kontinuierlichen Einbringung von teilchenförmigem Calciumcarbid in den ersten Reaktor,
(c) Mitteln zur Herstellung eines Kontaktes zwischen teilchenförmigem Calciumcarbid und einem Überschuß an Wasser in dem ersten Reaktor, um für Calciumcarbid und Wasser Reaktionsbedingungen mit einer Verweilzeit in wäßriger Phase zu erzeugen, in der das Calciumcarbid teilweise reagiert.
(d) Mitteln zur kontinuierlichen Förderung des teilweise reagierten Calciumcarbids aus Schritt (c) aus dem ersten Reaktor in den zweiten Reaktor,
(e) Mitteln zur Erzeugung einer einer Pfropfenströmungsreaktion entsprechenden Umgebung in dem zweiten Reaktor,
(f) Mitteln zur Entfernung von gasförmigem Acetylen aus dem Reaktionssystem, und
(g) Mitteln zur Entfernung von Calciumhydroxid aus dem zweiten Reaktor.

2. Apparatur nach Anspruch 1, die zusätzlich Mittel zur Rückführung von Wasser aus dem zweiten Reaktor in den ersten Reaktor umfaßt.

3. Apparatur nach Anspruch 1, dadurch gekennzeichnet, daß die Verweilzeit in dem ersten Reaktor so gewählt ist, daß zwischen 60 und 90 Prozent des Calciumcarbids reagieren.

4. Apparatur nach Anspruch 1, dadurch gekennzeichnet, daß die Mittel zur Herstellung eines Kontaktes in (c) Mittel umfassen, die einen Wasserstrom aufwärts durch die Calciumcarbidteilchen richten.

5. Apparatur nach Anspruch 4, dadurch gekennzeichnet, daß der aufwärts gerichtete Wasserstrom so eingestellt ist, daß teilweise reagierte Calciumcarbidteilchen mitgerissen und durch die Fördermittel in den zweiten Reaktor eingetragen werden.

6. Apparatur nach Anspruch 5, dadurch gekennzeichnet, daß der aufwärts gerichtete Wasserstrom so eingestellt ist, daß Calciumcarbidteilchen, die einen Durchmesser zwischen ungefähr 2 und 3 Millimetern erreicht haben, mitgerissen werden.

7. Apparatur nach Anspruch 5, dadurch gekennzeichnet, daß das durch die Reaktion von Calciumcarbid und Wasser in dem ersten Reaktor erzeugte Calciumhydroxid in dem aufwärts gerichteten Strom mitgerissen und durch die Fördermittel in den zweiten Reaktor eingetragen wird.

8. Apparatur nach Anspruch 1, die zusätzlich Mittel zu Entfernung von Teilchen mit einer größeren Dichte als Calciumcarbid aus dem ersten Reaktor umfaßt.

9. Apparatur nach Anspruch 8, dadurch gekennzeichnet, daß die Mittel zur Entfernung der Teilchen einen geschwindigkeitskontrollierten Durchflußregelungsbereich umfassen, dadurch gekennzeichnet, daß die Geschwindigkeit des aufwärts gerichteten Wasserstroms so eingestellt ist, daß Teilchen mit einer größeren Dichte als Calciumcarbid durch diesen Bereich nach unten getragen werden.

10. Apparatur nach Anspruch 1, dadurch gekennzeichnet, daß die einer Pfropfenströmungsreaktion entsprechende Umgebung in dem zweiten Reaktor durch einen zweiten Behälter erzeugt wird, wobei dieser zweite Behälter von der Art ist, daß sich das durch die Reaktion von Calciumcarbid und Wasser erzeugte Calciumhydroxid absetzen kann.

11. Apparatur nach Anspruch 10, dadurch gekennzeichnet, daß sich das Calciumhydroxid als dichter Bereich auf dem Boden des zweiten Reaktors absetzt.

12. Apparatur nach Anspruch 11, dadurch gekennzeichnet, daß die Mittel zur Entfernung des Calciumhydroxids aus dem zweiten Reaktor ein Rohr umfassen, das einen Strom aus dem dichten Bereich leitet.

13. Apparatur nach Anspruch 1, die zusätzlich eine Neutralisationsanlage umfaßt, um das aus dem zweiten Reaktor entfernte Calciumhydroxid mit Chlorwasserstoff zur Bildung von Calciumchlorid zur Reaktion zu bringen.

14. Apparatur nach Anspruch 13, dadurch gekennzeichnet, daß der Chlorwasserstoff als Chlorwasserstoffsäure vorliegt.

15. Apparatur nach Anspruch 13, dadurch gekennzeichnet, daß der Chlorwasserstoff als wasserfreier Chlorwasserstoff vorliegt.

16. Apparatur nach Anspruch 13, die zusätzlich Mittel zur Trocknung des Calciumchlorids umfaßt.

17. Apparatur nach Anspruch 16, die zusätzlich wärmeleitende Mittel umfaßt, welche die durch die Reaktion von Calciumcarbid und Wasser in dem ersten Reaktor erzeugte Wärme zu den Mitteln zur Trocknung des Calciumchlorids transportieren.

18. Apparatur nach Anspruch 13, die zusätzlich Mittel zur Verwendung der durch die Reaktion von Calciumhydroxid und Chlorwasserstoff erzeugte Wärme bei der Trocknung des Calciumchlorids umfaßt.

19. Verfahren zur Herstellung von Acetylen, bestehend aus:
(i) kontinuierlicher Einbringung eines Überschusses an Wasser und teilchenförmigem Calciumcarbid in einen ersten Reaktor,
(ii) Herstellung eines Kontaktes zwischen Wasser und Calciumcarbid in dem ersten Reaktor, damit diese zur Bildung von gasförmigem Acetylen und Calciumhydroxid unter Reaktionsbedingungen entsprechend einer wäßriger Phase reagieren,
(iii) Übertragen des nichtreagierten Calciumcarbids in einen zweiten Reaktor,
(iv) Herbeiführung einer Reaktion des nichtreagierten Calciumcarbids in dem zweiten Reaktor unter einer Pfropfenströmung entsprechenden Reaktionsbedingungen,
(v) Austragen des in dem ersten Reaktor und in dem zweiten Reaktor erzeugten gasförmigen Acetylens, und
(vi) Austragen des Calciumhydroxids aus dem zweiten Reaktor.

20. Verfahren nach Anspruch 19, das zusätzlich den Schritt der Rückfuhrung von Wasser aus dem zweiten Reaktor in den ersten Reaktor umfaßt.

21. Verfahren nach Anspruch 19, dadurch gekennzeichnet, daß die Verweilzeit in dem ersten Reaktor so gewählt ist, daß 60 bis 90 % des Calciumcarbids reagieren.

22. Verfahren nach Anspruch 19, dadurch gekennzeichnet, daß der Kontakt dadurch hergestellt wird, indem ein Wasserstrom aufwärts durch die Calciumcarbidteilchen gerichtet wird.

23. Verfahren nach Anspruch 22, dadurch gekennzeichnet, daß der aufwärts gerichtete Wasserstrom so eingestellt ist, daß teilweise reagierte Calciumcarbidteilchen zur Überführung in den zweiten Reaktor mitgerissen werden.

24. Verfahren nach Anspruch 22, dadurch gekennzeichnet, daß der aufwärts gerichtete Wasserstrom so eingestellt ist, daß Calciumcarbidteilchen, die einen Durchmesser zwischen ungefähr 2 und 3 Millimetern erreicht haben, mitgerissen werden.

25. Verfahren nach Anspruch 22, dadurch gekennzeichnet, daß das durch die Reaktion von Calciumcarbid und Wasser in dem ersten Reaktor erzeugte Calciumhydroxid in dem Aufwärtsstrom mitgerissen und in den zweiten Reaktor überführt wird.

26. Verfahren nach Anspruch 19, dadurch gekennzeichnet, daß Teilchen mit einer größeren Dichte als Calciumcarbid aus dem ersten Reaktor entfernt werden.

27. Verfahren nach Anspruch 26, dadurch gekennzeichnet, daß die Teilchen durch einen aufwärts gerichteten Wasserstrom in einem Durchflußregelungsbereich mit einer solchen Geschwindigkeit entfernt werden, daß Teilchen mit einer größeren Dichte als Calciumcarbid durch diesen Bereich nach unten getragen werden.

28. Verfahren nach Anspruch 19, dadurch gekennzeichnet, daß die einer Pfropfenströmungsreaktion entsprechende Umgebung in dem zweiten Reaktor unter Bedingungen vorliegt, unter denen sich das durch die Reaktion von Calciumcarbid und Wasser erzeugte Calciumhydroxid absetzen kann.

29. Verfahren nach Anspruch 28, dadurch gekennzeichnet, daß sich das Calciumhydroxid als dichter Bereich auf dem Boden des zweiten Reaktors absetzt.

30. Verfahren nach Anspruch 29, dadurch gekennzeichnet, daß das Calciumhydroxid aus dem zweiten Reaktor entfernt wird, indem ein Strom aus dem dichten Bereich durch ein Rohr geleitet wird.

31. Verfahren nach Anspruch 19, dadurch gekennzeichnet, daß das aus dem zweiten Reaktor entfernte Calciumhydroxid mit Chlorwasserstoff zur Bildung von Calciumchlorid zur Reaktion gebracht wird.

32. Verfahren nach Anspruch 31, dadurch gekennzeichnet, daß der Chlorwasserstoff als Chlorwasserstoffsäure vorliegt.

33. Verfahren nach Anspruch 31, dadurch gekennzeichnet, daß der Chlorwasserstoff als wasserfreier Chlorwasserstoff vorliegt.

34. Verfahren nach Anspruch 31, dadurch gekennzeichnet, daß das Calciumchlorid getrocknet wird.

35. Verfahren nach Anspruch 34, dadurch gekennzeichnet, daß die durch die Reaktion von Calciumcarbid und Wasser in dem ersten Reaktor erzeugte Wärme zu Mitteln zur Trocknung des Calciumchlorids übertragen wird.

36. Verfahren nach Anspruch 31, dadurch gekennzeichnet, daß die durch die Neutralisation des Calciumhydroxids und des Chlorwasserstoffs erzeugte Wärme zur Trocknung des Calciumchlorids verwendet wird.

## Revendications

1. Appareil pour la production d'acétylène, qui comprend:
(a) un système réacteur à deux étapes comprenant un réacteur primaire et-un réacteur secondaire,
(b) un moyen pour charger en continu du carbure de calcium particulaire dans le réacteur primaire,
(c) un moyen pour mettre en contact le carbure de calcium particulaire avec un excès d'eau dans le réacteur primaire pour fournir des conditions pour la réaction en phase aqueuse du carbure de calcium et de l'eau avec un temps de séjour assurant une réaction partielle du carbure de calcium,
(d) un moyen pour transporter en continu le carbure de calcium particulaire ayant partiellement réagi de l'étape (c) du réacteur primaire au réacteur secondaire,
(e) un moyen pour fournir un environnement de réaction avec écoulement par bonde dans le réacteur secondaire,
(f) un moyen pour enlever l'acétylène gazeux du système de réaction, et
(g) un moyen pour enlever l'hydroxyde de calcium du réacteur secondaire.

2. Appareil suivant la revendication 1, comprenant de plus un moyen pour le recyclage de l'eau du réacteur secondaire vers le réacteur primaire.

3. Appareil suivant la revendication 1, dans lequel le temps de séjour ménagé dans le réacteur primaire est tel qu'il permet la réaction de 60 à 90% du carbure de calcium.

4. Appareil suivant la revendication 1, dans lequel le moyen de contact dans l'étape (c) comprend un moyen pour faire monter un flux d'eau à travers les particules de carbure de calcium.

5. Appareil suivant la revendication 4, dans lequel le flux d'eau ascendant est régulé pour entraîner des particules de carbure de calcium ayant partiellement réagi et les transporter dans le réacteur secondaire par l'intermédiaire du moyen de transport.

6. Appareil suivant la revendication 5, dans lequel le flux d'eau ascendant est régulé pour entraîner des particules de carbure de calcium qui ont atteint une dimension comprise entre environ 2 et 3 mm de diamètre.

7. Appareil suivant la revendication 5, dans lequel l'hydroxyde de calcium produit dans le réacteur primaire à la suite de la réaction du carbure de calcium avec de l'eau, est entraîné dans le flux ascendant et transporté dans le réacteur secondaire par l'intermédiaire du moyen de transport.

8. Appareil suivant la revendication 1, comprenant de plus un moyen pour enlever les particules ayant une densité supérieure à celle du carbure de calcium provenant du réacteur primaire.

9. Appareil suivant la revendication 8, dans lequel le moyen servant à enlever les particules comprend une zone de restriction pour le contrôle de vitesse dans laquelle un flux d'eau ascendant est fourni à une vitesse telle que des particules ayant une densité supérieure à celle du carbure de calcium sont transportées vers le bas à travers la zone.

10. Appareil suivant la revendication 1, dans lequel l'environnement de réaction avec écoulement par bonde dans le récipient secondaire est fourni par un récipient secondaire ayant une configuration convenable pour permettre la décantation de l'hydroxyde de calcium produit par la réaction du carbure de calcium et de l'eau.

11. Appareil suivant la revendication 10, dans lequel l'hydroxyde de calcium se dépose en une zone dense dans le fond du réacteur secondaire.

12. Appareil suivant la revendication 11, dans lequel le moyen pour enlever l'hydroxyde de calcium du réacteur secondaire comprend un tube dirigeant le flux à partir de la zone dense.

13. Appareil suivant la revendication 1, qui comprend de plus une unité de neutralisation pour la réaction de l'hydroxyde de calcium éliminé du réacteur secondaire avec du chlorure d'hydrogène pour former du chlorure de calcium.

14. Appareil suivant la revendication 13, dans lequel le chlorure d'hydrogène est l'acide chlorhydrique.

15. Appareil suivant la revendication 13, dans lequel le chlorure d'hydrogène est du chlorure d'hydrogène anhydre.

16. Appareil suivant la revendication 13, comprenant de plus un moyen pour sécher le chlorure de calcium.

17. Appareil suivant la revendication 16, comprenant de plus un moyen caloporteur pour le transport de la chaleur produite par la réaction du carbure de calcium et de l'eau dans le réacteur primaire vers le moyen de séchage du chlorure de calcium.

18. Appareil suivant la revendication 13, comprenant de plus un moyen pour utiliser la chaleur produite par la réaction de l'hydroxyde de calcium et du chlorure d'hydrogène pour sécher le chlorure de calcium.

19. Procédé pour la production d'acétylène, qui comprend :
(i) l'addition en continu d'un excès d'eau et de carbure de calcium particulaire dans un réacteur primaire,
(ii) la mise en contact dans le réacteur primaire de l'eau et du carbure de calcium pour qu'ils réagissent en formant de l'acétylène gazeux et de l'hydroxyde de calcium dans des conditions de réaction en phase aqueuse,
(iii) le transfert du carbure de calcium n'ayant pas réagi vers un réacteur secondaire,
(iv) la réaction du carbure de calcium n'ayant par réagi dans le réacteur secondaire dans des conditions de réaction avec écoulement par bonde,
(v) la récupération de l'acétylène gazeux généré dans le réacteur primaire et le réacteur secondaire, et
(vi) la récupération de l'hydroxyde de calcium à partir du réacteur secondaire.

20. Procédé suivant la revendication 19, comprenant de plus l'étape de recyclage de l'eau du réacteur secondaire au réacteur primaire.

21. Procédé suivant la revendication 19, dans lequel le temps de séjour ménagé dans le réacteur primaire est tel qu'il permet la réaction de 60 à 90% du carbure de calcium.

22. Procédé suivant la revendication 19, dans lequel la mise en contact est réalisé par montée d'un flux d'eau à travers les particules de carbure de calcium.

23. Procédé suivant la revendication 22, dans lequel le flux d'eau ascendant est régulé pour entraîner des particules de carbure de calcium ayant partiellement réagi et les transporter dans le réacteur secondaire par l'intermédiaire du moyen de transport.

24. Procédé suivant la revendication 22, dans lequel le flux d'eau ascendant est régulé pour entraîner les particules de carbure de calcium qui ont atteint une dimension comprise entre environ 2 et 3 mm de diamètre.

25. Procédé suivant la revendication 22, dans lequel l'hydroxyde de calcium produit dans le réacteur primaire à la suite de la réaction du carbure de calcium et de l'eau est entraîné dans le flux ascendant et transporté dans le réacteur secondaire.

26. Procédé suivant la revendication 19, dans lequel les particules ayant une densité supérieure à celle du carbure de calcium sont enlevées du réacteur primaire.

27. Procédé suivant la revendication 26, dans lequel les particules sont enlevées par un flux d'eau ascendant dans une zone de restriction à une vitesse telle que des particules ayant une densité supérieure à celle du carbure de calcium sont transportées vers le bas à travers la zone.

28. Procédé suivant la revendication 19, dans lequel l'environnement de réaction avec écoulement par bonde dans le récipient secondaire est dans des conditions dans lesquelles l'hydroxyde de calcium produit par la réaction du carbure de calcium et de l'eau, est laissé décanter.

29. Procédé suivant la revendication 28, dans lequel l'hydroxyde de calcium se dépose en une zone dense dans le fond du réacteur secondaire.

30. Procédé suivant la revendication 29, dans lequel l'hydroxyde de calcium est enlevé du réacteur secondaire par envoi du flux provenant de la zone dense à travers un tube.

31. Procédé suivant la revendication 19, dans lequel l'hydroxyde de calcium enlevé du réacteur secondaire est fait réagir avec du chlorure d'hydrogène pour former du chlorure de calcium.

32. Procédé suivant la revendication 31, dans lequel le chlorure d'hydrogène est l'acide chlorhydrique.

33. Procédé suivant la revendication 31, dans lequel le chlorure d'hydrogène est du chlorure d'hydrogène anhydre.

34. Procédé suivant la revendication 31, dans lequel le chlorure de calcium est séché.

35. Procédé suivant la revendication 34, dans lequel la chaleur produite par la réaction du carbure de calcium avec l'eau dans le réacteur primaire est transportée vers un moyen de séchage du chlorure de calcium.

36. Procédé suivant la revendication 31, dans lequel la chaleur produite par la neutralisation de l'hydroxyde de calcium et du chlorure d'hydrogène est utilisée pour sécher le chlorure de calcium.
